# FASCICULE DE BREVET EUROPEEN

(11) **EP 3 183 621 B1**
(45) Date de publication et mention de la délivrance du brevet: **05.09.2018**
(21) Numéro de dépôt: 15759883.0
(22) Date de dépôt: 04.08.2015
(51) Int. Cl.: G05B 23/02, G06F 11/30, G07C 5/08

(54) **CALCULATEUR DE DIRECTION ASSISTÉE POURVU D'UN ENREGISTREUR D'ÉVÉNEMENTS INTEGRÉ**
COMPUTER FÜR EIN FAHRZEUG, WIE ETWA EIN SERVOLENKUNGSCOMPUTER, MIT INTEGRIERTEM EREIGNISAUFZEICHNER
COMPUTER FOR A VEHICLE, SUCH AS A POWER STEERING COMPUTER, PROVIDED WITH AN INTEGRATED EVENT RECORDER

(30) Priorité: 22.08.2014 FR 1457935
(43) Date de publication de la demande: 28.06.2017
(73) Titulaire: JTEKT Europe, 69540 Irigny (FR)
(72) Inventeur: DEVILLE, Jean-Luc, 69720 Saint Bonnet de Mure (FR); PILAZ, Pierre-Willem, 69170 Saint Marcel l'Eclaire (FR)
(74) Mandataire: Chevalier, Renaud Philippe
(86) Numéro de dépôt international: PCT/FR2015/052149
(87) Numéro de publication internationale: WO 2016/027022

(56) Documents cités:
- FR-A1- 2 876 814
- US-A1- 2005 033 558
- US-B1- 7 921 412

## Description

La présente invention concerne les calculateurs électroniques de gestion de systèmes embarqués sur des véhicules, et plus particulièrement sur des véhicules automobiles.

Il est connu d'équiper les véhicules automobiles d'un ou plusieurs calculateurs (dits « ECU », pour « Electronic Command Unit »), destinés à gérer différents systèmes embarqués, et notamment d'un calculateur de commande du groupe motopropulseur, d'un calculateur de commande du système de freinage, d'un calculateur de commande de la direction, etc.

Cependant, la multiplication des calculateurs ainsi que des fonctions remplies par de tels calculateurs tend également à multiplier la survenance de défauts, qui peuvent, dans certains cas, entraîner des situations dangereuses pour le véhicule ou ses occupants. Le document US2004/0215378 divulgue l'état de la technique le plus proche.

En outre, en cas d'incident ou d'accident, il est généralement long et difficile, sinon impossible, d'identifier avec certitude le défaut qui est véritablement la cause de l'incident, et, à plus forte raison, de déterminer l'origine exacte dudit défaut.

Les objets assignés à l'invention visent par conséquent à remédier aux inconvénients susmentionnés et à proposer un nouveau type de calculateur qui facilite la surveillance des défauts et le diagnostic des origines de tels défauts.

Les objets assignés à l'invention sont atteints au moyen d'un calculateur de véhicule automobile comprenant au moins un module de commande principal destiné à gérer un système embarqué dudit véhicule automobile, tel qu'un module de commande de direction destiné à gérer le système de direction assistée du véhicule, ledit module de commande principal utilisant une pluralité de variables internes qui sont représentatives des situations de vie successives du véhicule et/ou du fonctionnement du système embarqué, ledit calculateur étant caractérisé en ce qu'il comprend, en sus du module de commande principal, un module de surveillance intégré qui comprend :
- une unité d'acquisition agencée pour enregistrer dans une mémoire tampon, sur une période d'acquisition glissante prédéterminée, les valeurs successivement prises par une ou plusieurs variables internes en fonction du temps,
- une unité de déclenchement, agencée pour d'une part détecter, à partir d'une ou plusieurs conditions de déclenchement prédéterminées qui portent sur une ou plusieurs variables internes, l'apparition d'un évènement dit « évènement d'alerte », qui correspond à une situation de vie prédéfinie du véhicule ou du système embarqué jugée dangereuse ou anormale, et d'autre part pour identifier l'instant, dit « instant de déclenchement », auquel est survenu ledit évènement d'alerte,
- une unité d'extraction et de sauvegarde, placée sous la dépendance de l'unité de déclenchement, et agencée pour, en cas d'événement d'alerte, extraire de la mémoire tampon un ou plusieurs enregistrements, qui correspondent respectivement à une ou plusieurs variables internes, et qui couvrent chacun un intervalle de temps qui s'étend depuis un instant de début qui précède l'instant de déclenchement d'une durée dite « durée pré-évènement » prédéterminée, jusqu'à un instant de fin qui suit ledit instant de déclenchement d'une durée dite « durée post-évènement » prédéterminée, puis stocker ledit ou lesdits enregistrements dans une mémoire non volatile.

Avantageusement, l'intégration directe d'un module de surveillance au coeur même du calculateur qui assure la gestion d'un système embarqué (par exemple la gestion d'un système de direction assistée), permet audit module de surveillance d'accéder directement ("à la source"), et en temps réel, à toutes les données internes au module de commande, c'est-à-dire à n'importe quelle variable interne choisie, brute, telle qu'elle est acquise, traitée ou générée par ledit module de commande, et ce notamment sans avoir à subir les retards ou les pertes d'information qu'induirait un filtrage et/ou un transfert de ces données vers l'extérieur du calculateur.

Le traitement des variables internes par le module de surveillance, et plus particulièrement la détection d'un évènement d'alerte, est donc particulièrement rapide et fiable, ce qui optimise les performances et la réactivité dudit module de surveillance.

En outre, en percevant immédiatement un défaut (événement d'alerte) et en déclenchant immédiatement la sauvegarde d'un enregistrement qui remonte dans le passé (sur la durée pré-évènement) par rapport à l'instant de déclenchement qui caractérise l'apparition (ou à tout le moins la révélation) dudit défaut, le module de surveillance procure et préserve des informations d'historique cruciales pour identifier l'origine du défaut, et plus particulièrement pour établir le déroulement et l'enchaînement des évènements qui ont précédé ledit défaut et qui ont conduit audit défaut.

Grâce à l'invention, il devient donc possible de réaliser facilement, *a posteriori,* un diagnostic précis et fiable de l'origine d'un défaut.

On peut ainsi notamment établir, à partir des enregistrements d'une sélection de variables internes pertinentes, quel système embarqué ou bien quel comportement du conducteur ou du véhicule a été défaillant, et donc prendre, le cas échéant, les mesures nécessaires pour prévenir, à l'avenir, la survenance d'un tel défaut, ou en limiter les conséquences.

De même, en conservant une trace enregistrée de l'évolution de ces même variables internes, jugées pertinentes, après l'apparition du défaut, sur la durée post-évènement, on peut connaître avec précision, par une analyse menée *a posteriori,* le comportement et les réactions du système embarqué, du véhicule, et/ou du conducteur, qui sont consécutifs à l'apparition du défaut, et ainsi vérifier si le système embarqué a réagi convenablement, conformément aux prescriptions de son cahier des charges, dans l'intérêt de la sécurité du véhicule et de ses occupants.

Le cas échéant, on pourra notamment déterminer de la sorte si une éventuelle absence de réaction, ou une réaction incomplète ou inappropriée, du système embarqué provient d'une défaillance intrinsèque dudit système embarqué ou de son module de commande, ou bien d'une cause externe, liée à la défaillance d'un autre système ou bien encore à un comportement inadapté du conducteur.

A titre d'exemple, on comprendra qu'un système de gestion de direction assistée pourvu d'une fonction de correction automatique de l'angle de braquage de la direction peut être empêché d'agir, alors qu'il cherche à corriger d'urgence la trajectoire du véhicule, si la tension de la batterie (système externe) censée alimenter le moteur d'assistance de direction est insuffisante à l'instant considéré.

En définitive, la récupération et la sauvegarde d'informations tirées de la mémoire tampon, de part et d'autre de l'instant de déclenchement, permettra de reconstituer *a posteriori* une vision complète des causes et des conséquences d'un défaut.

Avantageusement, le stockage en mémoire non volatile du ou des enregistrements des variables internes surveillées par le module de surveillance permettra tout d'abord de préserver durablement les enregistrements, même après effacement de la mémoire tampon, et notamment après que le contact du véhicule aura été coupé, et ensuite de tenir ces enregistrements à disposition d'un outil de diagnostic externe au calculateur, avec lequel on pourra télécharger et analyser lesdits enregistrements.

L'exploitation des données recueillies par le module de surveillance pourra donc se faire de façon très commode, en toute sécurité, et à tout moment jugé opportun.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, de façon schématique, l'architecture générale d'un calculateur selon l'invention, comprenant un module de surveillance intégré.
La figure 2 illustre, selon un graphique schématique, le principe d'extraction de l'enregistrement d'un signal représentatif des évolutions dans le temps d'une variable interne, à partir de l'enregistrement brut contenu dans la mémoire tampon.
La figure 3 illustre, selon une vue schématique, les interactions possibles entre un utilisateur externe et un calculateur équipé d'un module de surveillance selon l'invention, incluant les actions de configuration dudit module de surveillance, et les actions d'interrogation à distance dudit module de surveillance.

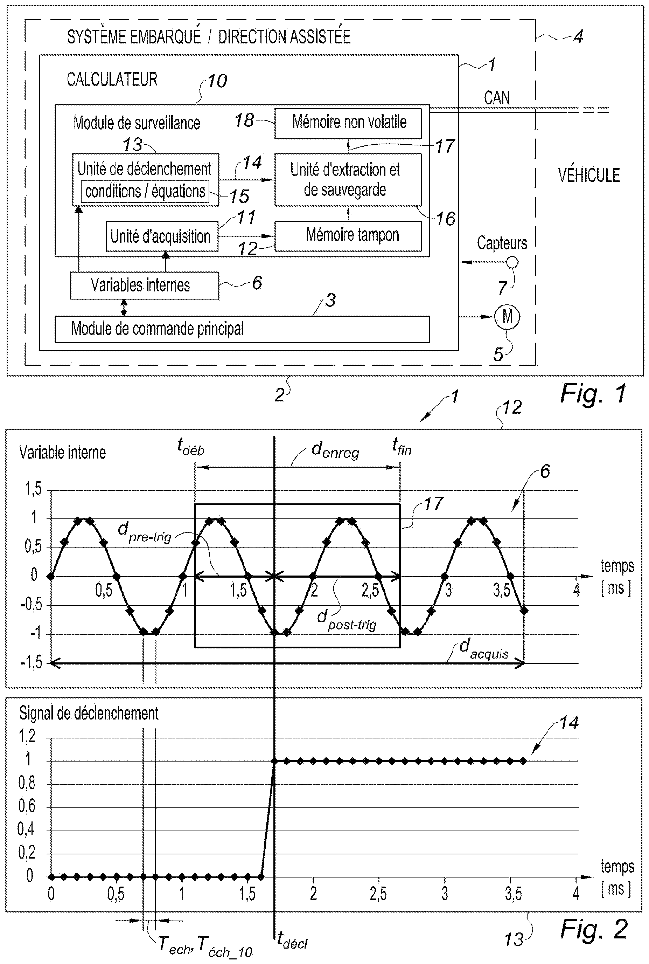

La présente invention concerne un calculateur 1 (embarqué) de véhicule automobile 2, tel que schématisé sur la figure 1, ledit calculateur 1 comprenant au moins un module de commande principal 3 destiné à gérer un système embarqué 4 dudit véhicule automobile 2.

Le système embarqué 4 pourra être de toute nature, et correspondre par exemple à un système de gestion du groupe motopropulseur (et en particulier de gestion de la combustion du carburant), à un système de gestion du freinage (en particulier un système ABS), à un système de gestion de la suspension, etc., le calculateur 1 pouvant alors être respectivement un calculateur de gestion de groupe motopropulseur, un calculateur de gestion de freinage, un calculateur de gestion de suspension, etc.

Selon une variante de réalisation particulièrement préférentielle, correspondant à celle illustrée sur la figure 1, le calculateur 1 constituera un calculateur de direction assistée, comprenant un module de commande 3 de direction destiné à gérer le système 4 de direction assistée du véhicule 2.

De manière connue en soi, un tel système 4 de direction assistée comprendra un volant de conduite monté sur une colonne de direction et qui permet au conducteur de modifier l'angle de braquage des roues directrices (de préférence motrices) du véhicule, par l'intermédiaire d'un mécanisme de direction comprenant par exemple une crémaillère de direction montée coulissante dans un carter de direction et qui actionne des biellettes de direction reliées à des porte-fusées portant lesdites roues directrices.

Ledit système 4 de direction comprendra également un moteur d'assistance 5, de préférence électrique, agencé pour exercer sur le mécanisme de direction, le cas échéant par l'intermédiaire d'un réducteur du genre réducteur à roue tangente et vis sans fin, un effort de manoeuvre, et plus particulièrement un couple de manoeuvre, qui sera déterminé par le module de commande principal 3 selon des lois d'assistance prédéfinies.

Quel que soit par ailleurs le système embarqué 4 qu'il pilote, le module de commande principal 3 utilise une pluralité de variables internes 6 qui sont représentatives des situations de vie successives du véhicule 2 et/ou du fonctionnement dudit système embarqué 4.

Lesdites variables internes 6 pourront comprendre toute donnée traitée en interne par le calculateur 1, et plus particulièrement toute donnée à laquelle accède le module de commande principal 3, acquise par ledit module de commande principal 3, traitée par ledit module de commande principal 3 ou générée par ledit module de commande principal 3 lors de son fonctionnement, et qui sera représentative, à l'instant considéré, d'un paramètre caractéristique de l'état du véhicule (vitesse du véhicule, accélération latérale, etc.) ou plus particulièrement de l'état du système embarqué 4 (position du volant de conduite, couple moteur délivré par le moteur d'assistance, etc.), ou bien encore d'un paramètre caractéristique de l'environnement du véhicule (température extérieure, etc.)

La nature et le nombre desdites variables internes 6 pourront varier notamment en fonction du système embarqué 4 géré par le module de commande 3.

A titre d'exemple, dans le cas d'un système 4 de direction assistée, les variables internes 6 pourront notamment comprendre, ou être choisies parmi : la mesure de la position angulaire du volant de conduite, la vitesse de rotation du volant de conduite, la mesure du couple volant exercé par le conducteur sur le volant de conduite, la mesure du couple moteur fourni par le moteur d'assistance 5 ou la mesure de la consigne de couple appliquée audit moteur d'assistance, la mesure ou l'estimation de l'accélération latérale ou de la vitesse de lacet du véhicule, la tension d'alimentation disponible aux bornes de la batterie alimentant le moteur d'assistance, etc.

Tout ou partie desdites variables internes 6 pourront être fournies par des capteurs 7 appartenant au système embarqué, associés au calculateur 1 et gérés par ledit calculateur 1.

Dans le cas d'un système 4 de direction assistée, lesdits capteurs 7 pourront notamment comprendre un capteur de type « resolver » permettant de déterminer la position de la direction, et plus particulièrement la position du volant de conduite, à partir d'une mesure de la position angulaire relative de l'arbre du moteur d'assistance 5, et/ou un capteur magnétique de couple volant qui mesure la déformation d'une barre de torsion interposée entre le volant de conduite et la colonne de direction.

Tel que cela est illustré sur la figure 2, les variables internes 6 prendront avantageusement la forme de signaux électriques, de préférence numériques, dont une ou plusieurs caractéristiques (amplitude, fréquence...) varieront au cours du temps en fonction de la valeur du paramètre que chacune desdites variables internes représente.

La fréquence d'échantillonnage (fréquence de rafraîchissement) desdites variables internes 6, qui pourra éventuellement être ajustable, sera définie par le calculateur 1.

A titre indicatif, cette fréquence d'échantillonnage sera de préférence choisie supérieure ou égale à 1kHz, de telle sorte que la période d'échantillonnage (période de rafraîchissement) T_{éch} des variables internes 6 sera égale, voire inférieure, à 1 ms (une milliseconde), tel que cela apparaît sur la figure 2.

Selon l'invention, et tel que cela est visible sur la figure 1, le calculateur 1 comprend, en sus du module de commande principal 3, un module de surveillance 10 intégré.

Au sens de l'invention, le module de surveillance 10 fait partie intégrante du calculateur 1, ce qui permettra un fonctionnement dudit module de surveillance 10 "au plus près" du module de commande principal 3, et notamment une acquisition et un traitement particulièrement rapide, par ledit module de surveillance 10, des variables internes 6 qui sont disponibles au sein du calculateur 1 et qui sont donc directement accessibles audit module de surveillance 10, sans passage par un réseau externe d'échange de données du type CAN (« Controller Area Network »).

Matériellement, le module de commande principal 3 et le module de surveillance 10 seront logés dans un seul et même boîtier de calculateur 1, le cas échéant sur une même carte électronique, voire au sein d'un même microprocesseur, ce qui simplifiera leur implantation au sein du véhicule 2.

Selon l'invention, le module de surveillance 10 comprend tout d'abord une unité d'acquisition 11 agencée pour enregistrer dans une mémoire tampon 12, sur une période d'acquisition glissante d_{acquis} prédéterminée, les valeurs successivement prises par une ou plusieurs variables internes 6 en fonction du temps.

La ou les variables internes 6 ainsi surveillées et enregistrées pourront bien entendu être librement choisies en fonction des besoins.

Aussi longtemps que la surveillance d'une variable interne 6 est activée, l'unité d'acquisition 11 réalise une acquisition permanente de ladite variable interne 6, en enregistrant chronologiquement, selon une fréquence d'échantillonnage prédéfinie, et de préférence ajustable, la succession des valeurs instantanées (brutes) prises par ladite variable interne 6, associées chacune à une information d'horodatage indiquant l'instant auquel a été observée ladite valeur.

On peut ainsi stocker provisoirement dans la mémoire tampon 12 l'historique du signal correspondant à la variable interne 6 sur toute la période d'acquisition d_{acquis}, et donc connaître et suivre précisément les évolutions de ladite variable interne 6 sur cette période.

Une fois la mémoire tampon 12 pleine, c'est-à-dire lorsque l'historique stocké s'étend sur une durée égale à la période d'acquisition d_{acquis} complète, alors l'admission dans la mémoire tampon d'une nouvelle mesure (valeur de la variable interne 6 et information d'horodatage associée) s'accompagne de l'effacement de la mesure la plus ancienne, selon un principe d'enregistrement (et d'écrasement) en boucle des données de type « first in first out ».

A titre indicatif, la période d'acquisition glissante d_{acquis} pourra être sensiblement comprise entre quelques centaines de microsecondes et plusieurs dizaines de secondes.

Ainsi, la période d'acquisition glissante d_{acquis} pourra par exemple être supérieure ou égale à 200 µs à 500 µs, voire égale ou supérieure à 1 s, 5 s ou 10 s.

Par ailleurs, la période d'acquisition glissante d_{acquis} pourra par exemple être inférieure ou égale à 300 s, à 150 s, à 120 s voire à 30 s, ou à 20 s.

Dans tous les cas, la taille de l'espace mémoire alloué à la mémoire tampon 12 sera alors bien entendu définie en conséquence.

Selon l'invention, le module de surveillance 10 comprend ensuite une unité de déclenchement 13, agencée pour d'une part détecter, à partir d'une ou plusieurs conditions de déclenchement prédéterminées qui portent sur une ou plusieurs variables internes 6, l'apparition d'un évènement dit « évènement d'alerte », qui correspond à une situation de vie prédéfinie du véhicule 2 ou du système embarqué 4, et ici plus particulièrement à une situation de vie (du véhicule 2 ou du système embarqué 4) qui est jugée dangereuse ou anormale (typiquement car ladite situation de vie correspond à un défaut de fonctionnement du système embarqué 4, ou à une anomalie de comportement du véhicule, qui entraîne ou qui est susceptible d'entraîner une perte de contrôle du véhicule et/ou une mise en danger des occupants dudit véhicule ou des autres usagers de la route, et/ou éventuellement un dommage au véhicule), et d'autre part pour identifier l'instant, dit « instant de déclenchement » t_{décl}, auquel est survenu ledit évènement d'alerte.

Avantageusement, l'unité de déclenchement 13 surveille en temps réel une ou des variables internes, dites « variables de détection », choisies parmi les variables internes 6 disponibles au sein du calculateur 1, de telle sorte que, lorsque l'évolution de la ou desdites variables de détection amène cette variable de détection, respectivement ces variables de détection, à vérifier une condition de déclenchement, ou une combinaison simultanée de plusieurs conditions (cumulatives) de déclenchement, alors l'unité de déclenchement 13 diagnostique un état d'alerte et émet un signal de déclenchement 14 (ou « trigger »).

L'instant où la ou les conditions de déclenchement se vérifient, c'est-à-dire en pratique l'instant d'émission dudit signal de déclenchement 14, marque l'instant de déclenchement t_{décl}.

A titre d'exemple, une condition de déclenchement pourra être définie comme le franchissement d'un seuil par la variable interne 6 concernée.

Ainsi, par exemple, dans le cas d'un système 4 de direction assistée, une condition de déclenchement pourra être définie comme le dépassement d'un seuil critique de vitesse de lacet indiquant une perte d'adhérence du véhicule.

La surveillance de l'apparition d'une telle condition de franchissement de seuil pourra alors être réalisée par une simple opération de comparaison de la valeur instantanée de la variable interne 6 concernée avec le seuil prédéfini (ladite comparaison renvoyant par exemple la valeur VRAI si le seuil est franchi, la valeur FAUX sinon).

Bien entendu, toute situation de vie particulière du véhicule 2 ou du système embarqué 4 qui sera considérée, à un moment ou un autre de la vie du véhicule 2, comme susceptible de présenter un intérêt, notamment en matière d'études statistiques ou d'amélioration de la sécurité des occupants du véhicule, pourra faire l'objet d'une définition au moyen de conditions de déclenchement appropriées, et donc faire l'objet d'une recherche (d'une surveillance en vue d'une détection) par l'unité de déclenchement 13.

Bien entendu, l'évènement d'alerte qui provoque l'émission du signal de déclenchement 14 pourra correspondre en pratique à une combinaison (à une survenance simultanée) de plusieurs évènements « élémentaires », définis chacun par une ou plusieurs conditions de déclenchement qui sont propres à l'évènement élémentaire considéré.

A titre d'exemple, on pourrait envisager de définir une situation de vie anormale particulière (un évènement d'alerte) de type « véhicule en sous-virage avec impossibilité de corriger automatiquement la trajectoire pour cause de défaillance d'alimentation » qui correspondrait à la combinaison simultanée d'une part d'un premier évènement d'alerte élémentaire de type « perte d'adhérence en sous-virage », lequel serait caractérisé par certaines conditions sur les variables internes 6 qui représentent la vitesse de lacet du véhicule et la position angulaire du volant de conduite, et d'autre part d'un second évènement d'alerte élémentaire de « perte d'alimentation du moteur d'assistance » qui serait caractérisé par le passage et/ou le maintien de la variable interne mesurant la tension de batterie sous un seuil bas prédéterminé.

De façon préférentielle, la ou les conditions de déclenchement sont exprimées par une ou (respectivement) des équation(s) booléenne(s) (expressions booléennes) dont le résultat, binaire, forme, lors de sa commutation, un signal de déclenchement 14 marquant l'instant de déclenchement t_{décl}, tel que cela est illustré sur la figure 2.

Plus particulièrement, la valeur du signal de déclenchement 14 sera de préférence égale à 1 (un) si la ou les conditions de déclenchement sont remplies, à 0 (zéro) sinon.

L'utilisation d'un langage booléen, relativement intuitif, permettra de formaliser la ou les conditions de déclenchement sous formes d'instructions logiques, selon une syntaxe à la fois rigoureuse et relativement simple à mettre en oeuvre.

De préférence, on utilisera en outre, pour la syntaxe de la ou des équations booléennes définissant la ou les conditions de déclenchement, une notation polonaise inverse (selon laquelle les opérateurs sont donnés après les opérandes), afin de gagner en rapidité de traitement et d'interprétation desdites équations.

Avantageusement, le rafraichissement de l'équation booléenne, et donc de son résultat, intervient automatiquement à chaque rafraîchissement de l'une ou l'autre des variables internes 6 qui sont prises en considération dans ladite équation.

L'unité de déclenchement 13 est donc particulièrement réactive.

De préférence, la ou les conditions de déclenchement sont exprimées par une ou des équations (expressions booléennes) contenues dans un fichier modifiable 15.

Il est donc possible de configurer très librement l'unité de déclenchement 13, en intervenant simplement sur le contenu dudit fichier modifiable 15, c'est-à-dire en éditant, ajoutant, supprimant, ou en activant/désactivant sélectivement, selon les besoins, une ou plusieurs équations contenues dans ledit fichier 15, sans qu'il soit nécessaire de modifier intrinsèquement l'architecture générale (logicielle et/ou matérielle) de fonctionnement de l'unité de déclenchement 13, et plus globalement l'architecture de fonctionnement du module de surveillance 10 et du calculateur 1, et notamment sans qu'il soit nécessaire de reprogrammer intrinsèquement le calculateur 1.

A ce titre, l'unité de déclenchement 13 contient de préférence un interpréteur de commande capable de lire le fichier modifiable 15 afin d'interpréter et d'exécuter les équations contenues dans ledit fichier 15 (comme autant de lignes de commandes directement compréhensibles par ledit interpréteur).

Ledit interpréteur de commande sera plus particulièrement capable d'interpréter la syntaxe d'une expression booléenne, en ayant une connaissance du langage booléen, notamment des opérateurs booléens, tels que ET, OU, NON, XOR, NOR, NAND, SI...ALORS, de l'opérateur parenthèses, mais également des opérateurs mathématiques courants tels que : supérieur à, inférieur à, addition, soustraction, multiplication, division, puissance, racine, valeur absolue, etc.

La définition de la ou des conditions de déclenchement, et plus globalement la définition des modalités de fonctionnement de l'unité de déclenchement 13, pourra donc être réalisée au moyen d'un langage très intuitif, sans nécessiter de compilation, et pourra être modifiée aussi souvent que nécessaire par une simple intervention sur la ou les équations contenues dans le fichier modifiable 15, ce qui confère au module de surveillance 10 une grande flexibilité.

L'intervention sur le fichier modifiable 15 pourra être réalisée par exemple en atelier à travers la prise de diagnostic du véhicule.

Selon une possibilité de mise en oeuvre de l'invention, il est parfaitement possible de prévoir par défaut dans le fichier 15, en usine, un jeu (une réserve) de plusieurs équations (de plusieurs conditions de déclenchement), dont au moins certaines seront laissées en sommeil par défaut, et ne seront activées, ultérieurement à la mise en circulation du véhicule, qu'en cas de besoin, dans certaines circonstances particulières.

Par exemple, on pourrait envisager l'activation de certaines équations lors d'un passage en atelier, suite à une opération de rappel qui amènerait à surveiller certains comportements du véhicule avec une vigilance accrue, ou bien encore l'activation de certaines équations à l'initiative d'un autre calculateur embarqué sur le véhicule 2, qui aurait détecté automatiquement le franchissement d'un certain degré de vieillissement du véhicule ou bien des anomalies ou des comportements à risque dudit véhicule qui justifieraient la mise en place de mesures de surveillance particulières (par exemple en vue de compléter les informations du garagiste lors d'une prochaine révision du véhicule).

A l'inverse, afin d'alléger la charge du module de surveillance 10, on pourra (re)mettre en sommeil (désactiver) une ou plusieurs équations lorsque celles-ci ne présentent plus d'utilité.

Selon l'invention, le module de surveillance 10 comprend enfin une unité d'extraction et de sauvegarde 16, placée sous la dépendance de l'unité de déclenchement 13, et agencée pour, en cas d'événement d'alerte (et plus particulièrement en cas de perception d'un signal de déclenchement 14), extraire de la mémoire tampon 12 un ou plusieurs enregistrements 17, qui correspondent respectivement à une ou plusieurs variables internes 6, et qui couvrent chacun un intervalle de temps d_{enreg} qui s'étend depuis un instant de début t_{déb} qui précède l'instant de déclenchement t_{décl} d'une durée dite « durée pré-évènement » d_{pré-trig} prédéterminée (t_{déb} = t_{décl} - d_{pré-trig}), jusqu'à un instant de fin t_{fin} qui suit ledit instant de déclenchement t_{décl} d'une durée dite « durée post-évènement » d_{post-trig} prédéterminée (t_{fin} = t_{décl} + d_{post-trig}), tel que cela est visible sur la figure 2, puis stocker ledit ou lesdits enregistrements 17 dans une mémoire non volatile 18.

Avantageusement, le module de surveillance 10 selon l'invention, dit « perturbographe », permet donc, en cas d'événement d'alerte, d'extraire de la mémoire tampon 12 et de transférer vers la mémoire non volatile 18, avant que ladite mémoire tampon 12 ne soit effacée, un enregistrement 17 qui couvre un sous-intervalle temporel (une fenêtre) d_{enreg} de la période glissante d'acquisition d_{acquis}, afin de conserver partiellement les données relatives à la ou aux variables internes 6 surveillées, exclusivement sur une plage de temps d_{enreg} qui est juste nécessaire et suffisante pour permettre la compréhension des causes de l'évènement d'alerte (en remontant dans le passé sur la durée pré-évènement d_{pré-trig} par rapport à l'instant de déclenchement t_{décl}) et des conséquences éventuelles dudit évènement d'alerte (en incluant dans l'enregistrement la durée post-évènement d_{post-trig}).

Avantageusement, le module de surveillance 10 peut donc agir comme une « boîte noire » sélective, qui prélève et conserve des échantillons de données (les enregistrements 17) de taille limitée, correspondant uniquement à des périodes utiles à la compréhension des défauts, chaque enregistrement 17 sauvegardé débutant (légèrement) avant l'instant de déclenchement t_{décl}, c'est-à-dire avant que les équations (de détection de l'évènement d'alerte) aient renvoyé la valeur VRAI, et s'achevant (légèrement) après ledit instant de déclenchement t_{décl}, c'est-à-dire après que les équations ont renvoyé la valeur VRAI (c'est-à-dire renvoyé un signal de déclenchement 14 égal à 1) pour l'évènement d'alerte considéré.

Ainsi, le module de surveillance 10 permet d'éviter toute perte d'information qui serait provoquée par un enregistrement qui interviendrait trop tardivement par rapport à l'évènement d'alerte (et ne permettrait pas de comprendre les causes dudit événement), ou bien la perte irréversible d'information qui serait due à un effacement glissant (en boucle) de la mémoire tampon 12, et ce tout en utilisant un espace de stockage de taille réduite (tant pour la mémoire-tampon 12 que pour la mémoire non volatile 18), puisqu'il n'est pas nécessaire de procéder à un stockage définitif et exhaustif de toutes les données concernant l'évolution des variables internes 6, mais seulement à une sauvegarde sélective, partielle, des seuls échantillons (enregistrements 17) pertinents.

A ce titre, on notera que, en réalisant l'extraction et la sauvegarde des enregistrements 17 de façon sélective, et donc intermittente, c'est-à-dire non permanente, à chaque fois que survient un évènement d'alerte mais uniquement lorsque survient un évènement d'alerte (alors que, au contraire, l'acquisition glissante "brute" des variables internes 6 par l'unité d'acquisition 11, et donc le stockage provisoire desdites variables en mémoire tampon 12, est permanente, pour ne pas risquer de perdre une information qui pourrait potentiellement s'avérer utile ultérieurement), on ne conserve finalement une information (ici un enregistrement 17 de variables internes 6) de façon durable dans la mémoire non volatile 18 que si ladite information est pertinente en raison de son lien avec un évènement d'alerte.

La durée de chaque enregistrement d_{enreg}, et plus particulièrement la durée pré-évènement d_{pré-trig} ainsi que la durée post-évènement d_{post-trig}, pourront le cas échéant être déterminées et ajustées au cas par cas, par exemple selon la nature de l'évènement d'alerte qui est surveillé et qui sert de déclencheur pour la sauvegarde d'enregistrements 17.

A titre indicatif, la durée pré-évènement d_{pré-trig} pourra être fixée à une valeur, de préférence ajustable, comprise entre 5 % et 95 % de la durée d'enregistrement d_{enreg} désirée.

Bien entendu, la durée pré-évènement d_{pré-trig} sera supérieure à la période d'échantillonnage T_{éch} des variables internes 6, et par exemple supérieure ou égale à trois fois, à cinq fois, à dix fois ladite période d'échantillonnage T_{éch} (voire davantage), de manière à ce que l'enregistrement 17 puisse retracer un historique significatif, au moyen d'un échantillon représentatif contenant une série suffisante de mesures de la ou des variables internes 6 concernées.

A titre indicatif, ladite durée pré-évènement d_{pré-trig} pourra être égale ou supérieure à 5 ms, à 10 ms, à 50 ms, à 100 ms, et même supérieure à 1 s, à 5 s, à 10 s voire à 30 s.

De manière analogue, la durée post-évènement d_{post-trig}, de préférence ajustable, sera fixée à une valeur complémentaire de la durée pré-évènement d_{pré-trig}, pour atteindre la durée d'enregistrement d_{enreg} totale désirée.

Ici encore, la durée post-évènement d_{post-trig} sera supérieure à la période d'échantillonnage T_{éch} des variables internes 6, et par exemple supérieure ou égale à trois fois, à cinq fois, à dix fois la période d'échantillonnage (ou davantage).

A titre indicatif, la durée post-évènement d_{post-trig} pourra être égale ou supérieure à 5 ms, à 10 ms, à 50 ms, à 100 ms, et même supérieure à 1 s, à 5 s, à 10 s voire à 30 s.

La mémoire non volatile 18 pourra être par exemple une mémoire Flash ou une EEPROM, qui conserve les données des enregistrements 17 de telle sorte que lesdites données puissent être lues après extinction du calculateur 1.

Au sein de cette mémoire non volatile 18, les enregistrements 17 pourront par exemple être archivés et indexés dans une structure de type base de données.

Bien entendu, la mémoire non volatile 18 pourra être dimensionnée de sorte à pouvoir contenir de multiples enregistrements 17.

Cette capacité à stocker une pluralité d'enregistrement 17 pourra notamment permettre de stocker plusieurs enregistrements répétés de même nature, c'est-à-dire portant tous sur une même variable interne ou même groupe de variables internes et réalisés successivement à des moments différents, et/ou plusieurs enregistrements de nature distincte, c'est-à-dire qui portent sur des variables internes (ou des groupes de variables internes) qui sont différentes d'un enregistrement à l'autre, et qui pourront par ailleurs avoir été réalisés simultanément ou à différents instants.

En particulier, l'invention pourra notamment permettre de réaliser plusieurs enregistrements 17 successifs (des mêmes variables internes) correspondant à plusieurs occurrences d'un évènement d'alerte de même nature, c'est-à-dire correspondant à plusieurs déclenchements successifs distincts de l'unité d'extraction et de sauvegarde 16 qui reposent sur la détection répétée d'une même condition de déclenchement (c'est-à-dire sur le ré-enclenchement à la valeur VRAI, à plusieurs reprises, d'une même équation).

Le cas échéant, on pourra ainsi mesurer *a posteriori* la fréquence d'apparition (fréquence de répétition) d'un type particulier d'événement d'alerte, et étudier dans les différents cas, par exemple à des fins statistiques, les causes de ce type d'événement ainsi que les réactions du système embarqué 4 à ce type d'événement.

Quels que soient leur nature et leur volume, les données d'enregistrement stockées dans la mémoire non volatile 18 seront avantageusement consultables par un appareil d'analyse externe au calculateur 1, qui pourra par exemple se connecter sur la prise de diagnostic du véhicule 2, voire interroger le module de surveillance 10 par télétransmission.

Ces données pourront également, le cas échéant, être exportées depuis la mémoire non volatile 18 interne au calculateur 1 vers un support de stockage externe (déporté), de type mémoire flash ou disque dur, qui sera connecté, provisoirement ou définitivement, audit calculateur 1, par exemple *via* le réseau de bord CAN.

Bien entendu, il est parfaitement envisageable de prévoir, en plus des équations destinées à la surveillance automatique et permanente de l'apparition d'un évènement d'alerte, une possibilité de déclenchement de l'unité d'extraction et de sauvegarde 16 par un signal de déclenchement 14 externe, en provenance par exemple d'un autre calculateur distant embarqué sur le véhicule 2 ou de tout autre appareil externe au calculateur 1.

Le signal de déclenchement d'origine externe pourra alors par exemple être acheminé au calculateur 1, et plus particulièrement au module de surveillance 10, par le réseau de bord CAN, ou bien encore par radiofréquence.

Selon une possibilité particulièrement préférentielle de mise en oeuvre, le module de commande principal 3 et le module de surveillance 10 (et plus particulièrement les sous-structures dudit module de surveillance 10 que constituent l'unité d'acquisition 11, la mémoire tampon 12, l'unité de déclenchement 13, l'unité d'extraction et de sauvegarde 16 et/ou la mémoire non volatile 18) sont des modules virtuels, obtenus par programmation du calculateur 1.

En pratique, chaque module 3, 10, respectivement chaque unité 11, 13, 16, sera ainsi de préférence programmé, sous forme d'un jeu d'instructions présent dans un circuit électronique du calculateur 1, pour réaliser les tâches propres qui lui sont assignées, telles que ces tâches ont été décrites dans ce qui précède.

Avantageusement, une telle structure virtuelle rendra le module de surveillance 10 particulièrement facile à implanter, éventuellement en rattrapage, sur tout calculateur 1 existant, sans surcoût ni contraintes particuliers.

En outre, une telle structure virtuelle requiert peu de ressources, puisqu'il suffit d'allouer de l'espace mémoire, dans le calculateur 1 existant, pour l'exécution des tâches propres au module de surveillance 10 et pour l'enregistrement des données liées à la surveillance des variables internes 6.

Avantageusement, le module de commande principal 3 et le module de surveillance 10 qui lui est adjoint selon l'invention peuvent partager une structure matérielle (hardware) unique, et notamment une horloge et une mémoire cache communes.

L'intégration d'un module de surveillance 10 selon l'invention, qui ne requiert aucun ajout d'appareillage physique, n'a donc aucune influence négative sur la compacité et la légèreté du calculateur 1, et donc plus globalement sur l'encombrement et le poids du système embarqué 4 ou du véhicule 2.

De préférence, le temps de réponse du module de surveillance 10, et plus particulièrement le temps de réponse de l'unité d'acquisition 11 et de l'unité de déclenchement 13 dudit module de surveillance 10, est égal ou inférieur à une milliseconde (1 ms), à compter du rafraîchissement, au sein du module de commande principal 3, de l'une ou l'autre des variables internes 6 concernées.

Ainsi, le module de surveillance 10 est particulièrement réactif, puisque, sitôt qu'un changement de situation (un changement de valeur d'une ou plusieurs variables internes 6) se manifeste en interne dans le calculateur 1, ce changement est pris en considération et traité par module de surveillance 10, quasiment en temps réel.

Par comparaison, si les variables internes 6 devaient transiter par le réseau de bord CAN pour atteindre un module de surveillance externe, on observerait d'emblée un retard de l'ordre de 10 ms à 100 ms induit par le seul transfert desdites variables internes.

En l'espèce, le temps de réponse (temps de cycle) très court, inférieur à la milliseconde, est avantageusement rendu possible par l'intégration en interne du module de surveillance 10, et permet de déclencher la sauvegarde d'un enregistrement 17 immédiatement à la survenance d'un évènement d'alerte, sans retard et donc sans risque de laisser perdre de l'information utile, ce qui permet de disposer d'un historique complet et détaillé et donc d'établir un diagnostic précis des origines et des conséquences de l'évènement d'alerte.

Grâce à son temps de réponse très court, la fréquence d'échantillonnage 1/T_{éch_10} à laquelle les variables internes 6 seront lues, rafraîchies, et traitées par le module de surveillance 10 pourra être particulièrement élevée, de préférence supérieure ou égale à plusieurs centaines de Hz, voire supérieure ou égale à 1 kHz, et par exemple être comprise entre 100 Hz et 20 kHz, ce qui permettra de recueillir pour chaque événement, aussi bref soit-il, et pour chacune des variables internes 6 surveillées, un enregistrement 17 qui comprendra un grand nombre de données.

Quel que soit l'événement d'alerte, et notamment en cas d'événement à la fois bref et grave (par exemple correspondant à une perte de contrôle du véhicule à grande vitesse provoquant une sortie de route) l'invention permettra donc de décrire *a posteriori* ledit évènement de façon complète et précise.

La période d'échantillonnage T_{éch_10} (et donc la fréquence d'échantillonnage 1/T_{éch_10}) du module de surveillance 10 pourra avantageusement être programmable, afin d'adapter la réactivité dudit module de surveillance 10 aux circonstances, et notamment au type d'événement d'alerte recherché et surveillé.

Selon une possibilité préférentielle de mise en oeuvre, la fréquence de rafraichissement et de traitement des variables internes 6 (fréquence d'échantillonnage 1/T_{éch_10}) au niveau de l'unité d'acquisition 11 et de l'unité de déclenchement 13 est identique à la fréquence de rafraîchissement (1/T_{éch}) desdites variables internes 6 au sein du module de commande principal 3.

En d'autres termes, le module de surveillance 10 pourra bénéficier d'une excellente résolution temporelle, particulièrement fine, lui conférant une très grande réactivité et une grande précision, du fait qu'il pourra être cadencé à la même fréquence d'horloge que le module de commande principal 3, c'est-à-dire à la fréquence d'horloge interne propre au calculateur 1.

L'intégration du module de surveillance 10 au calculateur 1 permet donc de synchroniser ledit module de surveillance 10 à grande vitesse sur le module de commande principal 3, et ainsi d'éviter tout retard de détection et d'enregistrement des évènements d'alerte.

De préférence, la bande passante (utile) du module de surveillance 10 est supérieure ou égale à 1 Mbit/s, à 1,5 Mbit/s voire à 2 Mbit/s en données utiles d'enregistrement et de stockage des variables internes 6.

A titre indicatif, l'unité d'acquisition 11 pourra être capable d'enregistrer 50 (cinquante) variables internes 6 de 2 (deux) à 4 (quatre) octets chacune à chaque cycle de rafraîchissement d'une milliseconde, et l'unité d'extraction et de sauvegarde 16 être capable d'en restituer et d'en sauvegarder autant.

Le débit de données utiles (ou « bande passante utile »), c'est-à-dire le débit des données contenant des informations effectives quant aux variables internes 6 (valeur et instant de mesure desdites variables internes) pourra donc en pratique être, au sein du module de surveillance 10, supérieur, et notamment au moins cinq fois supérieur, au débit de données utiles du réseau de bord du véhicule CAN (ledit réseau CAN possédant une bande passante absolue de l'ordre de 500 kbps à 1 Mbps, soit en pratique un débit de données utiles de l'ordre de 100 kbps à 200 kbps).

Grâce à ces taux de transfert internes particulièrement élevés, qui sont notamment rendus possibles par le fait que le module de surveillance 10 peut accéder directement aux variables internes 6 du module de commande principal 3, sans qu'il soit nécessaire de faire transiter lesdites variables internes par un réseau de type CAN externe au calculateur 1, le module de surveillance 10 sera particulièrement performant.

Par ailleurs, l'unité d'extraction et de sauvegarde 16 comprend de préférence des sécurités, telles que des clefs de cryptage, des protections en écriture et/ou des restrictions d'accès (par exemple par mot de passe), empêchant l'altération ou la falsification des enregistrements 17 stockés dans la mémoire non volatile 18.

L'authenticité des informations recueillies peut ainsi être garantie, ce qui permet, le cas échéant, d'opérer *a posteriori* une expertise fiable du ou des évènements d'alerte ayant déclenché les enregistrements 17.

Par ailleurs, des dispositions seront prises pour s'assurer que le module de surveillance 10 ne soit pas lui-même une source de défauts, et plus particulièrement pour s'assurer que le fonctionnement dudit module de surveillance 10 ne perturbe pas le fonctionnement normal du module de commande principal 3, et ne menace donc pas la sécurité du véhicule, de ses occupants ou des autres usagers de la route.

A cet effet, le module de surveillance 10 n'aura de préférence qu'un accès en lecture seule, et non en écriture, aux variables internes 6 utilisées par le module de commande principal 3.

Avantageusement, une telle protection, de type « Memory Protection Unit », garantira que le module de surveillance 10 n'interfère pas avec le module de commande 3, et plus particulièrement que l'exploitation et l'enregistrement des variables internes 6 par le module de surveillance 10 n'altère pas la fiabilité desdites variables internes, sur la base desquelles le module de commande principal 3 fonde ses décisions et décide des réactions du véhicule 2.

Pour des raisons analogues, le calculateur 1 pourra comprendre un module de vérification (non représenté) agencé pour contrôler la vitesse d'exécution du module de commande principal 3 afin de s'assurer que ledit module de commande principal 3 n'est pas ralenti par le module de surveillance 10.

De telles vérifications, de type « Process Flow Control », pourront notamment comprendre le chronométrage du passage du module de commande 3 par certains points de contrôle (« checkpoints ») prédéfinis, qui consistent par exemple en la restitution de certaines données (variables internes 6) ou l'exécution de certaines opérations périodiques par ledit module de commande 3, et ce de manière à vérifier l'absence de retard ou de dérive dans la vitesse d'exécution des algorithmes mis en oeuvre par ledit module de commande 3.

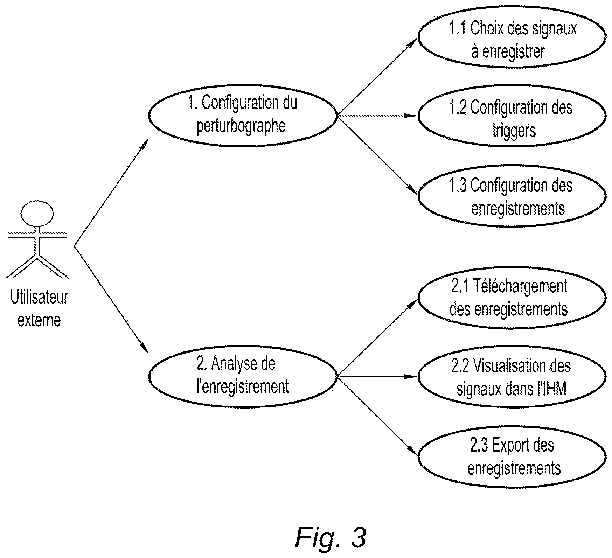

La figure 3 illustre plusieurs types de communication et d'interactions possibles entre un utilisateur externe et le calculateur 1, et plus particulièrement le module de surveillance (« perturbographe ») 10.

Le premier type de communication (référencé 1. sur la figure 3) concerne les opérations de configuration du module de surveillance 10, en usine ou bien en atelier, au moyen d'un appareil externe.

En particulier, on pourra ainsi renseigner, le cas échéant par l'intermédiaire de menus adaptés, plusieurs paramètres de configuration, tels que, en référence à la figure 3 :
- la liste des variables internes 6 (signaux) à surveiller (par l'unité d'acquisition 11) et des variables internes 6 à enregistrer (par l'unité d'extraction et de sauvegarde 16), tel que le représente l'item 1.1;
- les conditions de déclenchement (« triggers »), c'est-à-dire les équations de déclenchement de l'enregistrement, et le cas échéant, les équations de ré-enclenchement permettant de commander la génération et le stockage de plusieurs enregistrements 17 consécutifs, tel que le représente l'item 1.2 ;
- les durées pré-évènement d_{pré-trig} et post-évènement d_{post-trig} qui permettent de fixer la durée des enregistrements 17, ainsi que la taille de chaque enregistrement 17 (que ce soit la taille élémentaire, en octets, du codage de chaque donnée, et/ou la taille globale de l'espace mémoire maximal alloué à chaque enregistrement) et/ou le nombre maximal d'enregistrements 17 autorisé dans la mémoire non volatile 18, tel que le représente l'item 1.3.

Le second type de communication (référencé 2. sur la figure 3) concerne l'interrogation et l'analyse des données d'enregistrement recueillies par le perturbographe 10.

A ce titre, tel que cela est illustré sur la figure 3, les données des enregistrements 17 pourront être :
- téléchargées, par exemple par un appareil enregistreur connecté au calculateur 1 ou au réseau CAN (item 2.1) ;
- visualisées, par exemple sous forme de graphiques temporels, dans une interface homme-machine (« IHM », item 2.2) ;
- exportées sous divers formats pour pouvoir être utilisées dans des outils de calcul ou de simulation numérique, du genre Excel™ ou MatLab ™ (item 2.3).

Bien entendu, l'invention porte également en tant que telle sur l'utilisation, au sein d'un calculateur 1 embarqué, et plus précisément au sein d'un calculateur 1 de direction assistée, d'un module de surveillance 10 selon l'une ou l'autres des caractéristiques décrites dans ce qui précède, afin d'enregistrer (et sauvegarder), lors de l'apparition d'un ou plusieurs évènements d'alerte prédéterminés, l'évolution d'une ou plusieurs variables 6 internes au calculateur 1 avant et après l'instant d'apparition dudit évènement (c'est-à-dire avant et après l'instant de déclenchement t_{décl}).

Ainsi, l'invention portera sur l'intégration, au sein d'un même boîtier de calculateur 1 (pourvu de connecteurs de raccordement adaptés au système embarqué 4 et au réseau de bord CAN), d'un module de commande principal 3 et d'un module de surveillance 10, de sorte à optimiser le fonctionnement conjoint (à une cadence élevée, de préférence commune) de ces deux modules.

Un exemple, parmi d'autres, d'application de l'invention à un système de direction assistée 4 pourrait consister à surveiller d'une part des paramètres dynamiques du véhicule, tels que la vitesse linéaire et la vitesse de lacet, d'autre part des paramètres de la direction assistée, tels que la position angulaire et la vitesse de rotation du volant de conduite, ainsi que la consigne de couple moteur appliquée au moteur d'assistance, et enfin la tension de batterie disponible pour alimenter ledit moteur d'assistance.

On pourrait alors poser comme condition de déclenchement l'apparition d'une situation de perte d'adhérence du véhicule caractérisée par exemple par une vitesse de lacet trop faible (sous-virage) ou au contraire trop élevée (survirage) au regard de l'angle volant et de la vitesse linéaire du véhicule.

L'enregistrement 17 pourrait alors comprendre les paramètres dynamiques de vitesse linéaire et de vitesse de lacet, la position et la vitesse de volant, la consigne de couple moteur et la tension de batterie.

Ainsi, si le système 4 de direction comprend une fonction automatisée de correction de trajectoire, on pourra vérifier, au regard de l'évolution de ces paramètres, si ladite fonction a correctement exécuté les manoeuvres mécaniquement possibles de rattrapage du véhicule.

En cas de défaillance, on pourra notamment vérifier si la perte de contrôle du véhicule a résulté d'un dysfonctionnement intrinsèque de la fonction de correction de trajectoire (par exemple d'une erreur de calcul ou d'un retard dans l'application de la consigne moteur), ou bien d'une défaillance externe au système 4, par exemple d'une chute de la tension de batterie qui aurait empêché le moteur d'assistance 5 de développer un couple suffisant pour atteindre la consigne fixée.

Bien entendu, l'invention n'est nullement limitée aux seules variantes de réalisation décrites dans ce qui précède, l'homme du métier étant notamment à même d'isoler ou de combiner librement entre elles l'une ou l'autre des caractéristiques susmentionnées, ou encore de leur substituer des équivalents.

En particulier, tel que cela a été mentionné plus haut, l'invention peut trouver application dans tout type de calculateur 1 embarqué sur un véhicule quelconque, notamment un véhicule destiné au transport de marchandises et/ou de personnes.

En outre, l'invention porte bien entendu en tant que telle sur un procédé de surveillance de véhicule 2, procédé dont les caractéristiques, étapes et fonctions, avantageusement mises en oeuvre par le calculateur 1, les modules 3, 10 et les unités 11, 13, 16, pourront se déduire *mutatis mutandis* de la description dudit calculateur 1, desdits modules 3, 10 et desdites unités 11, 13, 16.

En particulier, ledit procédé de surveillance comprendra ainsi une étape (a) d'acquisition au cours de laquelle on enregistre, dans une mémoire tampon 12, sur une période d'acquisition glissante d_{acquis} prédéterminée, les valeurs successivement prises en fonction du temps par une ou plusieurs variables internes 6 utilisées par un module de commande principal 3 destiné à gérer un système embarqué 4 du véhicule 2, une étape (b) d'analyse et de déclenchement au cours de laquelle on analyse une ou plusieurs conditions de déclenchement prédéterminées qui portent sur une ou plusieurs variables internes 6 de manière à détecter l'apparition d'un évènement dit « évènement d'alerte », qui correspond à une situation de vie prédéfinie du véhicule 2 ou du système embarqué 4 jugée dangereuse ou anormale, et, si un évènement d'alerte est détecté, on identifie l'instant, dit « instant de déclenchement » t_{décl}, auquel est survenu ledit évènement d'alerte, puis une étape - conditionnelle - (c) d'extraction et de sauvegarde, que l'on exécute si (et seulement si) un évènement d'alerte est effectivement détecté lors de l'étape (b) d'analyse et de déclenchement, et au cours de laquelle on extrait de la mémoire tampon 12 un ou plusieurs enregistrements 17, qui correspondent respectivement à une ou plusieurs variables internes 6, et qui couvrent chacun un intervalle de temps d_{enreg} qui s'étend depuis un instant de début t_{déb} qui précède l'instant de déclenchement t_{décl} d'une durée dite « durée pré-évènement » d_{pré-trig} prédéterminée, jusqu'à un instant de fin t_{fin} qui suit ledit instant de déclenchement t_{décl} d'une durée dite « durée post-évènement » d_{post-trig} prédéterminée, puis l'on stocke ledit ou lesdits enregistrements 17 dans une mémoire non volatile 18.

## Revendications

1. Calculateur (1) de véhicule automobile (2) comprenant au moins un module de commande principal (3) destiné à gérer un système embarqué (4) dudit véhicule automobile, tel qu'un module de commande de direction destiné à gérer le système de direction assistée du véhicule, ledit module de commande principal (3) utilisant une pluralité de variables internes (6) qui sont représentatives des situations de vie successives du véhicule (2) et/ou du fonctionnement du système embarqué (4), ledit calculateur (1) étant **caractérisé en ce qu'**il comprend, en sus du module de commande principal (3), un module de surveillance (10) intégré qui comprend :
- une unité d'acquisition (11) agencée pour enregistrer dans une mémoire tampon (12), sur une période d'acquisition glissante (d_{acquis}) prédéterminée, les valeurs successivement prises par une ou plusieurs variables internes (6) en fonction du temps,
- une unité de déclenchement (13), agencée pour d'une part détecter, à partir d'une ou plusieurs conditions de déclenchement prédéterminées qui portent sur une ou plusieurs variables internes (6), l'apparition d'un évènement dit « événement d'alerte », qui correspond à une situation de vie prédéfinie du véhicule (2) ou du système embarqué (4) jugée dangereuse ou anormale, et d'autre part pour identifier l'instant, dit « instant de déclenchement » (t_{décl}), auquel est survenu ledit évènement d'alerte,
- une unité d'extraction et de sauvegarde (16), placée sous la dépendance de l'unité de déclenchement (13), et agencée pour, en cas d'événement d'alerte, extraire de la mémoire tampon (12) un ou plusieurs enregistrements (17), qui correspondent respectivement à une ou plusieurs variables internes (6), et qui couvrent chacun un intervalle de temps (d_{enreg}) qui s'étend depuis un instant de début (t_{déb}) qui précède l'instant de déclenchement (t_{décl}) d'une durée dite « durée pré-évènement » (d_{pré-trig}) prédéterminée, jusqu'à un instant de fin (t_{fin}) qui suit ledit instant de déclenchement (t_{décl}) d'une durée dite « durée post-évènement » (d_{post-trig}) prédéterminée, puis stocker ledit ou lesdits enregistrements (17) dans une mémoire non volatile (18).

2. Calculateur selon la revendication 1 **caractérisé en ce que** le temps de réponse du module de surveillance (10), et plus particulièrement de l'unité d'acquisition (11) et de l'unité de déclenchement (13) dudit module de surveillance, est égal ou inférieur à une milliseconde, à compter du rafraîchissement, au sein du module de commande principal (3), de l'une ou l'autre des variables internes (6) concernées.

3. Calculateur selon la revendication 1 ou 2 **caractérisé en ce que** la fréquence de rafraichissement et de traitement des variables internes (6) au niveau de l'unité d'acquisition (11) et de l'unité de déclenchement (13) est identique à la fréquence de rafraîchissement desdites variables internes (6) au sein du module de commande principal (3).

4. Calculateur selon l'une des revendications précédentes **caractérisé en ce que** la bande passante du module de surveillance (10) est supérieure ou égale à 1 Mbit/s, à 1,5 Mbit/s voire à 2 Mbit/s en données utiles d'enregistrement et de stockage des variables internes (6).

5. Calculateur selon l'une des revendications précédentes **caractérisé en ce que** la ou les conditions de déclenchement sont exprimées par une ou des équation(s) booléenne(s) dont le résultat, binaire, forme, lors de sa commutation, un signal de déclenchement (14) marquant l'instant de déclenchement (t_{décl}).

6. Calculateur selon la revendication 5 **caractérisé en ce que** l'on utilise, pour la syntaxe de la ou des équations booléennes définissant la ou les conditions de déclenchement, une notation polonaise inverse.

7. Calculateur selon l'une des revendications précédentes **caractérisé en ce que** la ou les conditions de déclenchement sont exprimées par une ou des équations contenues dans un fichier modifiable (15), et **en ce que** l'unité de déclenchement (13) contient un interpréteur de commande capable de lire ledit fichier (15) afin d'interpréter et d'exécuter lesdites équations.

8. Calculateur selon l'une des revendications précédentes **caractérisé en ce que** l'unité d'extraction et de sauvegarde (16) comprend des sécurités, telles que des clefs de cryptage, des protections en écriture et/ou des restrictions d'accès, empêchant l'altération ou la falsification des enregistrements (17) stockés dans la mémoire non volatile (18).

9. Calculateur selon l'une des revendications précédentes **caractérisé en ce que** le module de surveillance (10) n'a qu'un accès en lecture seule, et non en écriture, aux variables internes (6) utilisées par le module de commande principal (3).

10. Calculateur selon l'une des revendications précédentes **caractérisé en ce qu'**il comprend un module de vérification agencé pour contrôler la vitesse d'exécution du module de commande principal (3) afin de s'assurer que ledit module de commande principal (3) n'est pas ralenti par le module de surveillance (10).

11. Calculateur selon l'une des revendications précédentes **caractérisé en ce que** le module de commande principal (3) et le module de surveillance (10) sont des modules virtuels, obtenus par programmation du calculateur (1).

## Patentansprüche

1. Rechner (1) für ein Kraftfahrzeug (2), der mindestens ein Hauptsteuerungsmodul (3) umfasst, das dazu vorgesehen ist, ein bordeigenes System (4) des Kraftfahrzeugs, wie etwa ein Lenkungssteuerungsmodul zu verwalten, welches dazu vorgesehen ist, das Servolenkungssystem des Fahrzeugs zu verwalten, wobei das Hauptsteuerungsmodul (3) eine Vielzahl von internen Variablen (6) verwendet, die für die aufeinanderfolgenden Lebenssituation des Fahrzeugs (2) und/oder die Funktion des bordeigenen Systems (4) repräsentativ sind, wobei der Rechner (1) **dadurch gekennzeichnet ist, dass** er neben dem Hauptsteuerungsmodul (3) ein integriertes Überwachungsmodul (10) umfasst, welches umfasst:
- eine Erfassungseinheit (11), die dafür eingerichtet ist, über einen vorbestimmten gleitenden Erfassungszeitraum (d_{acquis}) die Werte, die nacheinander von einer oder mehreren internen Variablen (6) in Abhängigkeit von der Zeit genommen werden, in einem Pufferspeicher (12) aufzuzeichnen,
- eine Auslöseeinheit (13), die einerseits dafür eingerichtet ist, anhand von einer oder mehreren vorbestimmten Auslösebedingungen, die sich auf eine oder mehrere interne Variablen (6) beziehen, das Auftreten eines "Alarmereignis" genannten Ereignisses zu erkennen, welches einer vordefinierten, als gefährlich oder abnorm bewerteten Lebenssituation des Fahrzeugs (2) oder des bordeigenen Systems (4) entspricht, und andererseits dafür, den "Auslösezeitpunkt" (t_{décl}) genannten Zeitpunkt zu identifizieren, zu dem das Alarmereignis eingetreten ist,
- eine Extraktions- und Sicherungseinheit (16), die unter die Kontrolle der Auslöseeinheit (13) gestellt und dafür eingerichtet ist, im Alarmereignisfall eine oder mehrere Aufzeichnungen (17) aus dem Pufferspeicher (12) zu extrahieren, die jeweils einer oder mehreren internen Variablen (6) entsprechen und die jede ein Zeitintervall (d_{enreg}) abdecken, das sich von einem Startzeitpunkt (t_{déb}), der dem Auslösezeitpunkt (t_{décl}) um eine vorbestimmte, "Vorereignisdauer" (d_{pré-trig}) genannte Dauer vorangeht, bis zu einem Endzeitpunkt (t_{fin}) erstreckt, der dem Auslösezeitpunkt (t_{décl}) um eine vorbestimmte, "Nachereignisdauer (d_{post-trig}) genannte Dauer nachfolgt, und anschließend die Aufzeichnung oder Aufzeichnungen (17) in einem nicht flüchtigen Speicher (18) zu speichern.

2. Rechner nach Anspruch 1, **dadurch gekennzeichnet, dass** die Ansprechzeit des Überwachungsmoduls (10), und spezieller der Erfassungseinheit (11) und der Auslöseeinheit (13) des Überwachungsmoduls, gezählt ab der Aktualisierung der einen oder der anderen der betreffenden internen Variablen (6) innerhalb des Hauptsteuerungsmoduls (3) gleich oder kleiner als eine Millisekunde ist.

3. Rechner nach Anspruch 1 oder 2, **dadurch gekennzeichnet, dass** die Aktualisierungs- und Verarbeitungsfrequenz der internen Variablen (6) auf Ebene der Erfassungseinheit (11) und der Auslöseeinheit (13) mit der Aktualisierungsfrequenz der internen Variablen (6) innerhalb des Hauptsteuerungsmoduls (3) identisch ist.

4. Rechner nach einem der vorstehenden Ansprüche, **dadurch gekennzeichnet, dass** die Bandbreite des Überwachungsmoduls (10) größer als oder gleich 1 Mbit/s, als 1,5 Mbit/s, ja sogar als 2 Mbit/s an Nutzdaten zur Aufzeichnung und zur Speicherung der internen Variablen (6) ist.

5. Rechner nach einem der vorstehenden Ansprüche, **dadurch gekennzeichnet, dass** die Auslösebedingung oder -bedingungen von einer oder mehreren booleschen Gleichung(en) ausgedrückt werden, deren binäres Ergebnis bei seiner Vermittlung ein Auslösesignal (14) bildet, welches den Auslösezeitpunkt (t_{décl}) markiert.

6. Rechner nach Anspruch 5, **dadurch gekennzeichnet, dass** für die Syntax der booleschen Gleichung oder Gleichungen, die die Auslösebedingung oder -bedingungen definieren, eine umgekehrte polnische Notation verwendet wird.

7. Rechner nach einem der vorstehenden Ansprüche, **dadurch gekennzeichnet, dass** die Auslösebedingung oder -bedingungen von einer oder mehreren Gleichungen ausgedrückt werden, die in einer modifizierbaren Datei (15) enthalten sind, und dadurch, dass die Auslöseeinheit (13) einen Befehlsinterpreter enthält, der in der Lage ist, die Datei (15) zu lesen, um die Gleichungen zu interpretieren und auszuführen.

8. Rechner nach einem der vorstehenden Ansprüche, **dadurch gekennzeichnet, dass** die Extraktions- und Sicherungseinheit (16) Sicherheiten umfasst, wie etwa Verschlüsselungsschlüssel, Schreibschutze und/oder Zugriffsbeschränkungen, die die Veränderung oder die Verfälschung der im nicht flüchtigen Speicher (18) gespeicherten Aufzeichnungen (17) verhindert.

9. Rechner nach einem der vorstehenden Ansprüche, **dadurch gekennzeichnet, dass** das Überwachungsmodul (10) nur einen alleinigen Lese-, und keinen Schreibzugriff auf die internen Variablen (6) besitzt, die vom Hauptsteuerungsmodul (3) verwendet werden.

10. Rechner nach einem der vorstehenden Ansprüche, **dadurch gekennzeichnet, dass** er ein Verifizierungsmodul umfasst, das dafür eingerichtet ist, die Ausführungsgeschwindigkeit des Hauptsteuerungsmoduls (3) zu kontrollieren, um sich zu vergewissern, dass das Hauptsteuerungsmodul (3) nicht vom Überwachungsmodul (10) gebremst wird.

11. Rechner nach einem der vorstehenden Ansprüche, **dadurch gekennzeichnet, dass** das Hauptsteuerungsmodul (3) und das Überwachungsmodul (10) virtuelle Module sind, die durch Programmierung des Rechners (1) erhalten werden.

## Claims

1. A motor vehicle (2) computer (1) comprising at least a main control module (3) intended to manage an on-board system (4) of said motor vehicle, such as a steering control module intended to manage the power steering system of the vehicle, said main control module (3) using a plurality of internal variables (6) which are representative of the successive life situations of the vehicle (2) and/or the operation of the on-board system (4), said computer (1) being **characterizing in that** it comprises, in addition to the main control module (3), an integrated monitoring module (10) which comprises:
- an acquisition unit (11) arranged to record in a buffer (12), over a predetermined sliding acquisition period (d_{acquis}), the values successively taken by one or several internal variable(s) (6) as a function of time,
- a trigger unit (13) arranged, on the one hand, to detect from one or more predetermined trigger condition(s) that relate(s) to one or more internal variable(s) (6), the occurrence of an event called "alert event", which corresponds to a predefined life situation of the vehicle (2) or of the on-board system (4) considered dangerous or abnormal and, on the other hand, to identify the time, called "trigger time" (t_{décl}), at which said alert event occurred,
- an extraction and backup unit (16) placed under the dependency of the trigger unit (13) and arranged, in case of alert event, to extract from the buffer (12) one or more records (17), which correspond respectively to one or more internal variables (6) and which cover each a time interval (d_{enreg}) extending from a start time (t_{déb}) which precedes the trigger time (t_{décl}) of a predetermined duration called "pre-event duration" (d_{pre-trig}) to an end time (t_{fin}) which follows said trigger time (t_{décl}) of a predetermined duration called "post-event duration" (d_{post-trig}), then to store said record(s) (17) in a non-volatile memory (18).

2. The computer according to claim 1, **characterized in that** the response time of the monitoring module (10), and more particularly the acquisition unit (11) and the trigger unit (13) of said monitoring module, is less than or equal to one millisecond, following the refreshment, within the main control module (3), of either of the concerned internal variables (6).

3. The computer according to claim 1 or 2, **characterized in that** the refresh and processing rate of the internal variables (6) at the acquisition unit (11) and the trigger unit (13) is identical to the refresh rate of said internal variables (6) within the main control module (3).

4. The computer according to any of the preceding claims, **characterized in that** the bandwidth of the monitoring module (10) is greater than or equal to 1 Mbit/s, 1.5 Mbit/s or 2 Mbit/s as useful record and storage data of the internal variables (6).

5. The computer according to any of the preceding claims, **characterized in that** the trigger condition(s) is/are expressed by one or more boolean equation(s) whose binary result forms, when it is switched, a trigger signal (14) marking the trigger time (t_{décl}).

6. The computer according to claim 5 **characterized in that**, for the syntax of the boolean equation(s) defining the trigger condition(s), a reverse polish notation is used.

7. The computer according to any of the preceding claims, **characterized in that** the trigger condition(s) is/are expressed by one or more contained equation(s) in an editable file (15), and **in that** the trigger unit (13) contains a control interpreter capable of reading said file (15) in order to interpret and execute said equations.

8. The computer according to any of the preceding claims, **characterized in that** the extraction and backup unit (16) comprises security means, such as encryption keys, write-protections and/or access restrictions, preventing the alteration or falsification of the records (17) stored in the non-volatile memory (18).

9. The computer according to any of the preceding claims, **characterized in that** the monitoring module (10) has only one read-only access, and not write-only access, to the internal variables (6) used by the main control module (3).

10. The computer according to any of the preceding claims, **characterized in that** it comprises a verification module arranged to check the execution speed of the main control module (3) in order to ensure that said main module control (3) is not slowed down by the monitoring module (10).

11. The computer according to any of the preceding claims, **characterized in that** the main control module (3) and the monitoring module (10) are virtual modules, obtained by programming the computer (1).
